# DEMANDE DE BREVET EUROPEEN

(11) **EP 4 303 811 A1**
(43) Date de publication de la demande: **10.01.2024**
(21) Numéro de dépôt: 23184193.3
(22) Date de dépôt: 07.07.2023
(51) Int. Cl.: G06T 7/00, G06T 7/11, G06T 7/168

(54) **PROCÉDÉ ET DISPOSITIF DE TRAITEMENT DE DONNÉES MULTIDIMENSIONNELLES DE MICROSCOPIE POUR LA LOCALISATION DE DÉFORMATIONS DANS UN ÉCHANTILLON**

(30) Priorité: 07.07.2022 FR 2206954
(71) Demandeur: Commissariat à l'énergie atomique et aux énergies alternatives, 75015 Paris (FR)
(72) Inventeur: GUEDJ, Cyril, 38054 GRENOBLE CEDEX 9 (FR)
(74) Mandataire: Lavoix

(57) **Abrégé**

L'invention concerne un procédé et un dispositif de traitement de données multidimensionnelles obtenues à partir d'au moins une image de microscopie d'un échantillon, formant un pavé de données d'entrée à N dimensions. Le dispositif met en oeuvre des modules de calcul (22), à partir d'un sous-pavé de composante, comportant des données homogènes selon un critère d'homogénéité relatif à au moins un matériau de l'échantillon observé, d'un sous-pavé de gouttes, comportant des gouttes représentatives d'une structure atomique de l'échantillon observé; des modules de masquage (24,26) par un masque de sonde et un masque de référence, appliqués au sous-pavé de gouttes transformé dans un domaine fréquentiel, permettent d'obtenir des sous-pavés de données positionnelles de sonde et de référence. Un module (32) d'estimation d'un déplacement entre le sous-pavé de données positionnelles de sonde et le sous-pavé de données positionnelles de référence, permettant d'obtenir une cartographie des déformations selon au moins une dimension.

## Description

La présente invention concerne un procédé et un dispositif de traitement de données multidimensionnelles de microscopie pour la localisation de déformations dans un échantillon, comportant une acquisition d'au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux.

L'invention se situe dans le domaine du traitement de données multidimensionnelles de microscopie, obtenues par observation d'échantillons composés d'un ou plusieurs matériaux, pour l'analyse de propriétés physiques de leurs structures.

Plus particulièrement, l'invention trouve des applications dans la localisation de déformations observées dans des matériaux cristallins, par exemple appliquée dans l'inspection de qualité dans une chaîne de production.

De manière connue, les cristaux sont composés d'une structure périodique, discrète et ordonnée d'atomes, appelée structure ou maille cristalline, définie par un réseau de Bravais.

En pratique, des matériaux observés comportant une ou plusieurs espèces cristallines et/ou amorphes peuvent présenter des déformations ou irrégularités.

De telles déformations ou irrégularités peuvent induire des contraintes ou dysfonctionnements dans des dispositifs utilisant de tels matériaux, par exemple des courants de fuite dans des transistors.

Il est utile de disposer d'outils performants pour réaliser l'inspection de matériaux, et détecter la présence éventuelle de déformations ou irrégularités, en phase de calibration ou en phase d'optimisation technologique de divers dispositifs utilisant les matériaux.

L'analyse de propriétés physiques de matériaux par traitement de données de spectres (1D) et d'images (2D) obtenues par microscopie a été développée à cet effet.

Les images et spectres sont par exemple obtenus par microscopie électronique en transmission à haute résolution (HRTEM et HRSTEM et 4D-STEM), microscopie de fluorescence X (HRSTEM-EDX), microscopie de perte d'énergie électronique (HRSTEM-EELS et HRSTEM-VEELS), microscopie électronique en transmission filtrée en énergie (EF-HRTEM, EF-HRSTEM), microscopie à force atomique (AFM), microscopie à effet tunnel (STM), sonde atomique tomographique ou tomographie électronique par exemple. Les images de microscopie obtenues sont des images à résolution atomique, c'est-à-dire de résolution spatiale inférieure ou égale à 2 nanomètres.

Des ensembles de données de spectres et d'images représentatives chacune d'au moins une partie de l'échantillon observé sont obtenues par microscopie, formant un pavé de données à N dimensions (ou données multidimensionnelles), N étant un entier supérieur ou égal à 2, également appelé « datacube ». Ce pavé comporte des gouttes, également appelées taches ou spots, ou « spikes » ou « blobs » en anglais, qui se détachent sur un fond homogène (par exemple des gouttes ou taches claires sur fond homogène sombre). Ces gouttes sont représentatives de caractéristiques structurelles du matériau de l'échantillon observé, par exemple d'un alignement d'atomes le long de la direction d'observation. Le pavé de données acquis par microscopie peut également contenir du bruit.

Par exemple, s'agissant de l'observation de cristaux, des gouttes disposées selon un motif régulier (e.g. périodique) représentent le maillage cristallin régulier. En deux dimensions, les gouttes sont également appelées taches. En une dimension, les gouttes sont des points.

Mathématiquement, une goutte est une composante simplement connexe d'un espace topologique discret, au sens de la topologie générale. Cela signifie que tout lacet tracé dans une goutte peut être réduit par homotopie à un point. Physiquement, une goutte représente par exemple le signal électrique produit par les pixels d'un détecteur matriciel suite à l'impact d'une particule (électron, photon, ion, fermions, boson, etc.). La particule est toujours beaucoup plus petite que le pixel, donc la goutte peut toujours se réduire à un point par homotopie, conformément à la définition mathématique de la goutte. Il existe donc un accord précis entre la définition physique et la définition mathématique de la goutte.

Une difficulté particulière est l'observation de déformations, dans un échantillon observé, par rapport à une référence représentative d'un matériau parfait. Une déformation représente une déviation par rapport à la position théorique attendue pour le matériau considéré.

Dans l'état de la technique, on connaît des méthodes de mesure de déformations dans des matériaux observés par microscopie. En particulier, une technique appelée diffraction d'électrons par précession (de l'anglais « Procession electron diffraction ») a été proposée dans l'article de R. Vincent et P.A. Midgley « Double conical beam-rocking system for measurement of integrated electron diffraction intensities », publié dans Ultramicroscopy, Vol. 53, n°3, 1994. Cette technique permet d'obtenir une résolution spatiale de l'ordre de 2 nm et une précision de 0,02 %. De plus, l'acquisition des données nécessite une irradiation électronique de durée assez longue, ce qui peut endommager l'échantillon analysé pour les matériaux les plus fragiles.

Il existe donc un besoin d'améliorer la précision de localisation des déformations, tout en préservant l'échantillon observé.

A cet effet, l'invention propose, selon un aspect, un procédé de traitement de données multidimensionnelles de microscopie pour la localisation de déformations dans un échantillon, comportant une acquisition d'au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux. Le procédé comporte des étapes de :
- pour au moins un sous-pavé de données dudit pavé de données d'entrée, dit sous-pavé de composante, comportant des données homogènes selon un critère d'homogénéité relatif à au moins un matériau de l'échantillon observé, application d'un traitement pour obtenir un sous-pavé, dit sous-pavé de gouttes, comportant des gouttes représentatives d'une structure atomique d'une partie de l'échantillon observé ;
- application d'une transformation de Fourier sur le sous-pavé de gouttes pour obtenir un sous-pavé de données de fréquences, dans le domaine fréquentiel,
- application d'un masque de sonde dans le domaine fréquentiel au sous-pavé de données de fréquences, ledit masque de sonde étant déterminé en fonction dudit au moins un matériau de l'échantillon observé, et ensuite application d'une transformation de Fourier inverse pour obtenir un sous-pavé de données positionnelles de sonde,
- application d'un masque de référence dans le domaine fréquentiel au sous-pavé de données de fréquences, ledit masque de référence étant déterminé en fonction dudit au moins un matériau de l'échantillon observé, et ensuite application d'une transformation de Fourier inverse pour obtenir un sous-pavé de données positionnelles de référence,
- estimation d'un déplacement entre le sous-pavé de données positionnelles de sonde et le sous-pavé de données positionnelles de référence selon au moins une dimension desdites N dimensions, permettant d'obtenir une cartographie des déformations selon ladite au moins une dimension, le masque de sonde comportant de premiers motifs, et le masque de référence comportant de deuxièmes motifs, lesdits deuxièmes motifs étant de forme analogue et de dimension réduite par rapport aux premiers motifs.

Avantageusement, le procédé proposé permet d'obtenir une très bonne précision, allant jusqu'à l'atome individuel, et fonctionne avec des technologies d'acquisition rapides.

Le procédé de traitement de données multidimensionnelles de microscopie pour la localisation de déformation selon l'invention peut également présenter une ou plusieurs des caractéristiques ci-dessous, prises indépendamment ou selon toutes les combinaisons techniquement envisageables.

Le procédé comporte une étape de découpage du pavé de données d'entrée en sous-pavés de composantes, chaque sous-pavé de composante comportant des données homogènes selon un critère d'homogénéité relatif à au moins un matériau de l'échantillon observé.

L'étape de découpage met en oeuvre une segmentation automatisée par apprentissage machine.

Le critère d'homogénéité est un critère d'homogénéité de structure, et/ou de valeurs d'intensité des données et/ou de permittivité diélectrique et/ou de propriétés électromagnétiques.

L'application d'un traitement pour obtenir un sous-pavé de gouttes comportant des gouttes représentatives d'une structure atomique d'une partie de l'échantillon observé met en oeuvre un algorithme d'apprentissage machine, entraîné pour classifier les données du sous-pavé de composante en deux classes, respectivement une classe de « fond » et une classe de « gouttes ».

Le procédé comporte en outre, après la classification, une application d'une segmentation morphologique.

L'application d'un traitement pour obtenir un sous-pavé de gouttes comportant des gouttes représentatives d'une structure atomique d'une partie de l'échantillon observé met en oeuvre un filtrage par convolution avec un noyau de taille donnée, une normalisation locale et un seuillage de binarisation.

Le procédé comporte une étape de calcul d'un masque de sonde à partir du sous-pavé de données de fréquences, et une étape de calcul d'un masque de référence à partir du masque de sonde, dans lequel le masque de sonde comporte de premiers motifs, et le masque de référence comporte de deuxièmes motifs, lesdits deuxièmes motifs étant de forme analogue et de dimension réduite par rapport aux premiers motifs.

Le procédé comporte une étape de calcul d'un masque de référence par simulation à partir de caractéristiques dudit échantillon et de paramètres utilisés lors de l'acquisition de l'image de microscopie.

Dans le cas où ledit sous-pavé de données de fréquences correspond à un matériau cristallin, le masque de sonde est formé par un réseau périodique de boules en N dimensions, chaque boule ayant un premier diamètre associé, et ledit masque de référence est formé par un réseau périodique de motifs en forme de boule en N dimensions ayant un deuxième diamètre inférieur au premier diamètre.

Le réseau périodique de boules est obtenu, pour ledit matériau cristallin, à partir d'un diagramme de diffraction simulé pour ledit matériau cristallin.

Le périodique de boules est obtenu, par application d'une classification par une méthode de classification par apprentissage machine entraînée à cet effet, appliquée au sous-pavé de données de fréquences.

Dans le cas où ledit sous-pavé de données de fréquences correspond à un matériau amorphe, ledit masque de sonde comporte des sphéroïdes concentriques autour d'un point central du domaine fréquentiel, de première épaisseur, le ledit masque de référence comporte de sphéroïdes concentriques autour d'un point central du domaine fréquentiel, de deuxième épaisseur, inférieure à la première épaisseur.

L'estimation d'un déplacement permettant d'obtenir une cartographie des déformations selon ladite au moins une dimension met en oeuvre une méthode d'estimation par vélocimétrie de particules.

Le procédé est mis en oeuvre par le processeur d'un dispositif de calcul.

Selon un autre l'aspect, l'invention concerne un programme d'ordinateur comportant des instructions logicielles qui, lorsqu'elles sont exécutées par un dispositif électronique programmable, mettent en oeuvre un procédé de données multidimensionnelles de microscopie pour la localisation de déformations dans un échantillon tel que brièvement décrit ci-dessus.

Selon un autre aspect, l'invention concerne un dispositif de traitement de données multidimensionnelles de microscopie pour la localisation de déformations dans un échantillon, configuré pour acquérir au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux. Le dispositif comporte un processeur de calcul configuré pour mettre en oeuvre :
- pour au moins un sous-pavé de données dudit pavé de données d'entrée, dit sous-pavé de composante, comportant des données homogènes selon un critère d'homogénéité relatif à au moins un matériau de l'échantillon observé, un module d'application d'un traitement pour obtenir un sous-pavé, dit sous-pavé de gouttes, comportant des gouttes représentatives d'une structure atomique d'une partie de l'échantillon observé ;
- un module d'application d'une transformation de Fourier sur le sous-pavé de gouttes pour obtenir un sous-pavé de données de fréquences, dans le domaine fréquentiel,
- un module d'application d'un masque de sonde dans le domaine fréquentiel au sous-pavé de données de fréquences, ledit masque de sonde étant déterminé en fonction dudit au moins un matériau de l'échantillon observé, et ensuite un module d'application d'une transformation de Fourier inverse pour obtenir un sous-pavé de données positionnelles de sonde,
- un module d'application d'un masque de référence dans le domaine fréquentiel au sous-pavé de données de fréquences, ledit masque de référence étant déterminé en fonction dudit au moins un matériau de l'échantillon observé, et ensuite un module d'application d'une transformation de Fourier inverse pour obtenir un sous-pavé de données positionnelles de référence,
- un module d'estimation d'un déplacement entre le sous-pavé de données positionnelles de sonde et le sous-pavé de données positionnelles de référence selon au moins une dimension desdites N dimensions, permettant d'obtenir une cartographie des déformations selon ladite au moins une dimension, le masque de sonde comportant de premiers motifs, et le masque de référence comportant de deuxièmes motifs, lesdits deuxièmes motifs étant de forme analogue et de dimension réduite par rapport aux premiers motifs.

Avantageusement, le dispositif de traitement de données multidimensionnelles de microscopie pour la localisation de déformations dans un échantillon est configuré pour mettre en oeuvre un procédé de traitement de données multidimensionnelles de microscopie pour la localisation de déformations dans un échantillon tel que brièvement décrit ci-dessus, selon toutes les variantes possibles de ce procédé.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est un schéma-bloc d'un système d'inspection de données multidimensionnelles de microscopie comportant un dispositif de traitement de données multidimensionnelles de microscopie selon un mode de réalisation ;
[Fig 2] la figure 2 est un synoptique d'un procédé de traitement de données multidimensionnelles de microscopie pour la localisation de déformations selon un mode de réalisation.
[Fig 3] la figure 3 est un premier exemple de découpage en composantes homogènes ;
[Fig 4] la figure 4 est un deuxième exemple de découpage en composantes homogènes ;
[Fig 5] la figure 5 illustre un traitement pour obtenir une image comportant des composantes simplement connexes pour un cristal ;
[Fig 6] la figure 6 illustre un traitement pour obtenir une image comportant des composantes simplement connexes pour un matériau amorphe ;
[Fig 7] la figure 7 illustre la présence d'artefacts dus à la transformation de Fourier ;
[Fig 8] la figure 8 illustre un exemple de masque de sonde cristallin;
[Fig 9] la figure 9 illustre un exemple de masque de sonde amorphe.

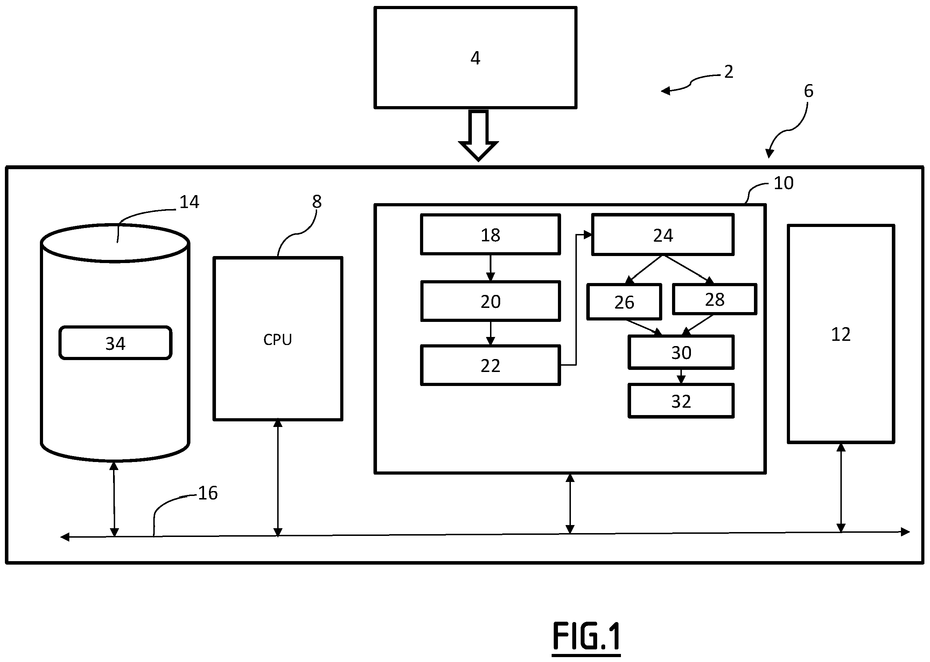

La **figure** 1 illustre schématiquement un système de détection de déformations 2 dans un échantillon à partir d'images et de spectres acquis par un microscope électronique 4.

Dans un mode de réalisation, le microscope 4 est un microscope électronique en transmission (TEM) qui permet d'acquérir des images d'un échantillon composé d'un ou plusieurs matériaux, comportant par exemple des matériaux cristallins et/ou amorphes.

Le microscope électronique 4 permet d'acquérir simultanément des images de diffraction électronique, des spectres EELS (pour « Electron Energy Loss Spectroscopy »), des spectres EDX (pour « Energy Dispersive X-Ray Analysis ») des signaux de différents capteurs (BF pour « Bright field », DF pour « Dark field », DPC pour « Differential phase contrast » ou tout autre capteur adapté ou customisé), pour chaque point de l'échantillon en mode de microscopie à balayage appelé mode STEM (pour « Scanning Transmission Electron Microscope »). Un autre mode d'acquisition possible est le mode TEM qui permet d'obtenir une image globale sans avoir à balayer le faisceau d'électrons.

Chaque spectre ou image acquis est représenté sous forme d'image numérique, comportant des points ou pixels, chaque image étant représentative d'au moins une partie de l'échantillon observé.

L'ensemble des spectres et images acquis forme un pavé de données à N dimensions, N étant un entier naturel supérieur ou égal à 2. Un tel pavé de données est également appelé « datacube ».

Dans un mode de réalisation, plusieurs spectres ou images sont acquis dans le temps, montrant une évolution de l'échantillon lors de l'analyse. Dans ce mode de réalisation, le temps est une dimension supplémentaire du pavé de données.

En complément, une autre dimension du pavé de données est la focalisation du microscope, l'énergie des électrons, un angle (de l'échantillon, de collection des électrons, de convergence de électrons), ou tout autre paramètre de réglage du microscope susceptible de varier de manière contrôlée durant la mesure.

Les données incomplètes peuvent éventuellement être extrapolées à partir des valeurs voisines le cas échéant, par exemple pour corriger les éventuelles imperfections rencontrés durant l'acquisition de données. En règle générale les mesures à l'échelle atomique sont très souvent entachées de défauts car un simple bruit peut parfois les perturber.

Dans un pavé de données multidimensionnelles d'un échantillon de structure cristalline, la maille de cristal forme un réseau périodique de gouttes observables disposées selon un motif régulier qui représente le maillage cristallin régulier.

Les défauts structurels ou irrégularités d'une telle structure forment des gouttes également, mais qui sont par exemple irrégulièrement disposées, et parfois plus petites que les gouttes appartenant au motif régulier du cristal.

Comme déjà indiqué ci-dessus, mathématiquement, une goutte est une composante simplement connexe d'un espace topologique discret, au sens de la topologie générale.

Les valeurs des pixels appartenant à une goutte se distinguent d'un fond d'image.

Un pavé de données multidimensionnelles d'un échantillon d'une structure physique observée est transmis à un dispositif 6 de traitement de données multidimensionnelles de microscopie pour la localisation de déformations dans l'échantillon observé.

Par exemple, la transmission est effectuée par une liaison filaire ou par liaison sans fil (optique, radio, ou autre).

Le dispositif 6 de traitement est, dans un mode de réalisation, un dispositif électronique programmable, e.g. un ordinateur.

Le dispositif 6 comporte un processeur 8 associé à une mémoire électronique 10. Optionnellement, le dispositif 6 comporte une interface homme-machine 12, comportant notamment un écran d'affichage de données. En outre le dispositif 6 comporte ou est connecté à une mémoire de stockage 14. Les éléments 8, 10, 12, 14 du dispositif 6 sont adaptés pour communiquer via un bus de communication 16.

Le processeur 8 est configuré pour exécuter des modules 18, 20, 22, 24, 26, 28, 30, 32, mémorisés dans la mémoire électronique 10, pour mettre en oeuvre un procédé de traitement de données multidimensionnelles de microscopie.

Le module 18 est un module d'obtention de pavé de données multidimensionnelles à traiter, configuré pour obtenir un pavé de données comportant au moins une image d'entrée à partir d'une image obtenue par microscopie, dite image de microscopie.

Par exemple, le module d'obtention 18 est configuré pour obtenir le pavé de données à traiter (ou pavé de données d'entrée) à partir d'une mémoire électronique, où ces données ont été mémorisées après acquisition.

Le module 20 est un module de découpage du pavé de données d'entrée en sous-pavés de composantes, chaque composante comportant des données homogènes selon un critère d'homogénéité relatif à au moins un matériau de l'échantillon observé. Par exemple, le module 20 découpe le pavé de données en un ou plusieurs sous-pavés de matériaux soit cristallins, chaque matériau cristallin étant caractérisé par un maillage cristallin, soit de matériaux amorphes ou soit d'un mélange de phases de tels matériaux qui présentent un aspect homogène. Mathématiquement, le critère d'homogénéité peut être précisément quantifié par un traitement d'image approprié décrit dans la littérature.

Le module 22 est un module d'application d'un traitement permettant d'obtenir, à partir d'un sous-pavé de composante, un sous-pavé de gouttes, comportant des gouttes représentatives d'une structure atomique d'une partie de l'échantillon observé. Par exemple, le module de traitement 22 met en oeuvre un débruitage, et optionnellement de binarisation, ou une classification par apprentissage machine comme décrit ci-après.

Le module 24 est un module d'application d'une transformation de Fourier sur le sous-pavé de gouttes pour obtenir un sous-pavé de données fréquentielles dans le domaine fréquentiel.

Le module 26 est un module de masquage de sonde qui applique un masque de sonde dans le domaine fréquentiel au sous-pavé de données de fréquences, le masque de sonde étant déterminé en fonction d'un matériau de l'échantillon observé.

Le module 28 est un module de masquage de référence qui applique un masque de référence dans le domaine fréquentiel au sous-pavé de données de fréquences, le masque de référence étant déterminé en fonction d'un matériau de l'échantillon observé. Le masque de référence est différent du masque de sonde, il comporte des motifs de plus petites dimensions que le masque de sonde, comme décrit plus en détail ci-après.

Enfin, un module 30 d'application d'une transformation de Fourier inverse est adapté à être appliqué au résultat du module 26 de masquage de référence et au module 28 de masquage de sonde, permettant d'obtenir respectivement un sous-pavé de données positionnelles de sonde de l'échantillon observé, et un sous-pavé de données positionnelles de référence de l'échantillon observé.

Le module 32 est un module d'estimation d'un déplacement entre le sous-pavé de données positionnelles de sonde et le sous-pavé de données positionnelles de référence selon au moins une dimension des N dimensions, permettant d'obtenir une cartographie des déformations selon ladite au moins une dimension. La ou chaque cartographie de déformations 34 est mémorisée.

Dans un mode de réalisation, les modules 18, 20, 22, 24, 26, 28, 30, 32 sont réalisés chacun sous forme d'un logiciel, et forment un programme d'ordinateur.

En variante non représentée, les modules 18, 20, 22, 24, 26, 28, 30, 32 sont réalisés chacun sous forme d'un composant logique programmable, tel qu'un FPGA (de l'anglais *Field Programmable Gate Array*)*,* un GPU (processeur graphique) ou un GPGPU (de l'anglais *General-purpose processing on graphies processing*)*,* ou encore sous forme d'un circuit intégré dédié, tel qu'un ASIC (de l'anglais *Application Spécifie Integrated Circuit*)*.*

Le logiciel de traitement de données multidimensionnelles de microscopie pour la localisation de déformations est en outre apte à être enregistré, sous forme de programme d'ordinateur comportant des instructions logicielles, sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM, RRAM, PCRAM), une carte magnétique ou une carte optique.

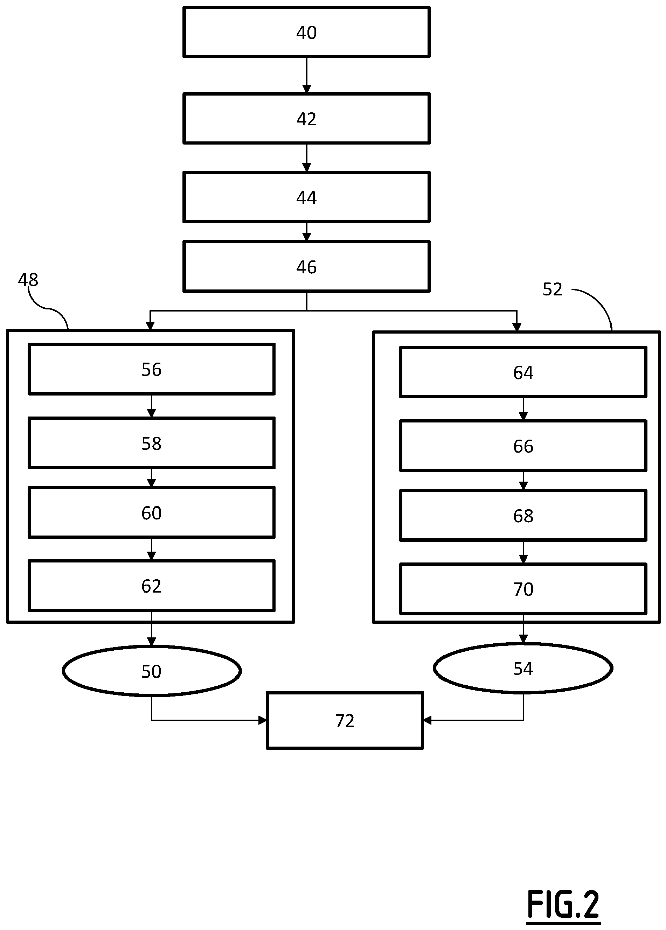

La **figure 2** est un synoptique des principales étapes d'un procédé de traitement de données multidimensionnelles de microscopie pour la localisation de déformations dans un échantillon observé par microscopie selon un mode de réalisation.

Le procédé comporte une étape 40 d'acquisition d'un pavé de données (d'images et de spectres) de microscopie à N dimensions, N étant un entier supérieur ou égal à 2.

Chaque donnée d'image a une valeur numérique, ou intensité, représentée sur un nombre choisi de bits.

Dans le cas particulier où N est égal à deux, chaque pavé de données multidimensionnelles est une image à deux dimensions (2D).

Le terme image sera utilisé par la suite pour désigner les pavés de données 2D ; étant entendu que les méthodes décrites s'appliquent de manière analogue pour N dimensions, avec N supérieur ou égal à 2.

Les illustrations données à titre d'exemple, sont des illustrations d'images numériques à 2 dimensions, à partir de d'images HRSTEM-HAADF (de l'anglais « High Resolution Scanning Transmission Electron Microscope »- « High-angle annular dark-field ») simulées, l'intensité de chaque point de l'image ayant une valeur correspondant au signal mesuré par un détecteur HAADF.

Bien entendu, le procédé de l'invention n'est pas limité à ce type d'acquisition d'images par microscopie, et s'applique avec toute variante d'acquisition de données par un microscope 4, comme indiqué ci-dessus.

Le pavé de données d'image et de spectres obtenu à l'étape d'acquisition est appelé pavé de données d'entrée.

Le procédé comporte ensuite, optionnellement, une étape 42 de découpage (ou segmentation par régions) du pavé de données d'entrée en sous-pavés de composantes (également appelés composantes homogènes), chaque composante comportant des données homogènes selon un critère d'homogénéité relatif à au moins un sous ensemble des données d'entrées.

Le critère d'homogénéité est par exemple une homogénéité de structure, en référence à des motifs répétitifs, le motif correspondant à un type de structure pour un matériau donné.

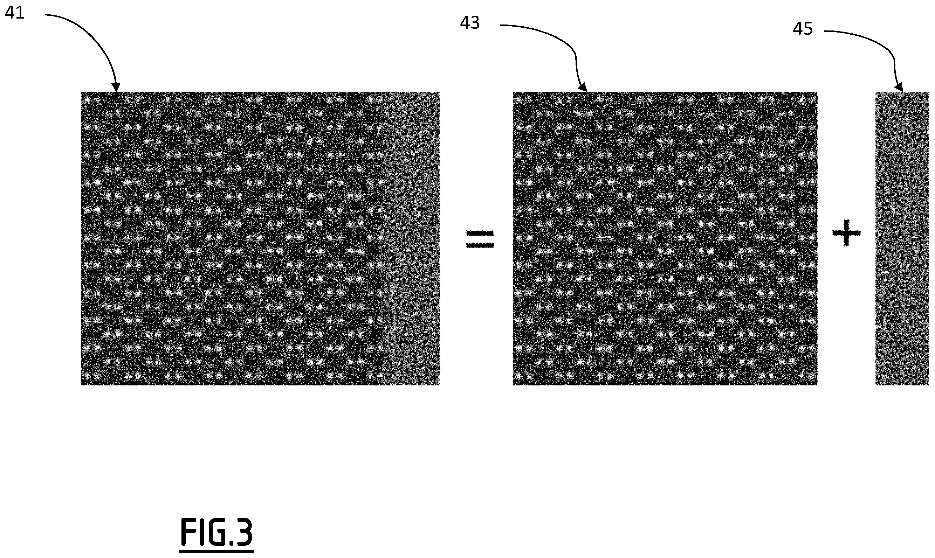

Par exemple un cristal d'épaisseur donnée donnera une image constituée d'un motif périodique facile à identifier (motif 43 de la figure 3). En l'absence d'identification d'un motif élémentaire qui se répète par translation dans toute l'image, alors la région est qualifiée d'amorphe (motif 45 de la figure 3). Il existe une grande variété de méthodes de classification et segmentation en régions, connues par l'homme du métier. Le but consiste à regrouper les pixels en régions, qui constituent un pavage ou une partition de l'image selon un critère choisi. Par exemple, la fonction de distribution de paires (peak-pair distribution fonction) ou fonction de distribution radiale et la distribution d'angles polaires des segments qui relient entre eux les plus proches voisins permet de quantifier la répartition des gouttes dans l'images. Pour segmenter l'image, un découpage en régions qui ont une distribution de distances et d'angles entre proches voisins qui soit homogène est effectué. Ces régions sont les composantes homogènes de l'image.

En d'autres termes, chaque sous-pavé de composante distincte est une partie du pavé de donnés qui correspond à une structure distincte, caractérisée par une distribution donnée des distances et des angles polaires entre gouttes voisines.

Dans le cas d'un matériau multicouches, une composante correspond à une couche homogène de l'empilement de couches.

Par exemple, l'étape de découpage 42 permet d'obtenir un sous-pavé de matériau cristallin et un sous-pavé de matériau amorphe, par exemple une séparation entre silicium pur et une couche amorphe.

Dans un mode de réalisation, le découpage de l'étape 42 met en oeuvre une segmentation (ou classification) automatisée par apprentissage machine.

En variante, le découpage est effectué manuellement par un opérateur.

L'étape de découpage 42 est optionnelle, le pavé de données d'entrée pouvant représenter un matériau homogène. Dans ce cas, dans la suite du procédé, le pavé de données d'entrée est le sous-pavé de composante mentionné par la suite.

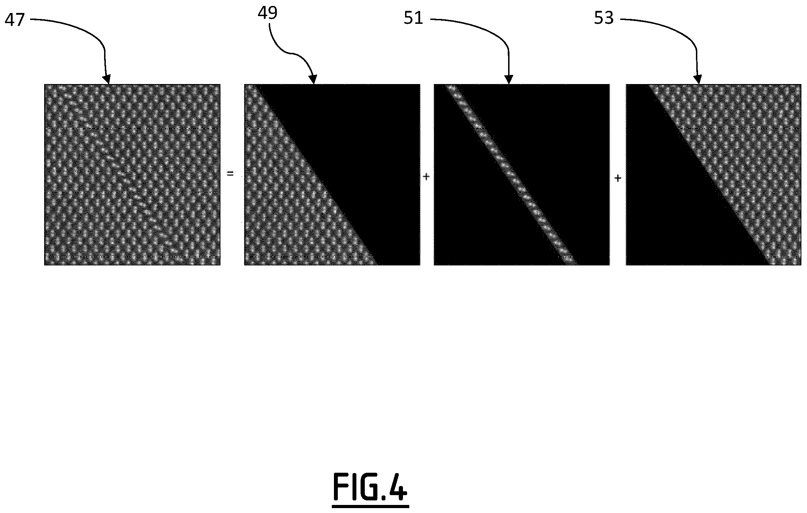

Les figures 3 et 4 illustrent respectivement des découpages d'une image d'entrée (pavé de données d'entrée à deux dimensions) en sous-images comportant des composantes homogènes.

Dans la **figure 3****,** une image d'entrée 41 est découpée en une sous-image 43 de matériau cristallin (e.g. du silicium) et une sous-image 45 de matériau amorphe (e.g. a-Si_{w}CₓO_{y}H_{z}).

Dans la **figure 4****,** une image d'entrée 47 est découpée en trois sous-images 49, 51 et 53 correspondant chacune à une structure différentiée.

De retour à la figure 2, l'étape 42 de découpage est suivie d'une étape 44 d'application d'un traitement pour obtenir un sous-pavé de gouttes représentatives d'une structure atomique d'au moins une partie de l'échantillon observé.

L'étape 44 est appliquée à au moins un des sous-pavés de composante obtenus à l'issue de l'étape de découpage 42.

De préférence, l'étape 44 et les étapes suivantes sont répétées, de manière analogue, pour chaque sous-pavé de composante obtenu à l'étape 42.

Dans un premier mode de réalisation, l'étape 44 met en oeuvre un algorithme d'apprentissage machine pour distinguer deux classes, respectivement la classe de « gouttes » (ou « spots » en anglais) et la classe de « fond ». L'apprentissage est effectué de manière différenciée sur des pavés de données correspondant à des matériaux cristallins, pour chaque orientation cristallographique et pour chaque réglage de microscope, et sur des pavés de données correspondant à des matériaux amorphes, pour chaque famille de paramètres de matériaux ou d'acquisition de données.

Par exemple, l'apprentissage machine est effectué avec un algorithme de type forêt aléatoire rapide « fast random forest », décrit dans l'article de Léo Breiman (2001). « Random Forests », publié dans Machine Learning. 45(1):5-32).

En variante, d'autres algorithmes de classification par apprentissage machine peuvent être mis en oeuvre, par exemple de type Bayesien, ou à base de fonctions, ou à base de règles, ou une combinaison de tels algorithmes, ou à base de toute la palette d'outils utilisés en classification par apprentissage machine.

Optionnellement, la classification en deux classes est suivie d'une segmentation par ligne de partage des eaux (en anglais « watershed »), qui est une méthode de segmentation morphologique classique. J.B.T.M. Roerdink et A. Meijster. "The watershed transform: définitions, algorithms, and parallellization stratégies". Dans Fundamenta Informaticae 41 (2000), p. 187-228. Cette méthode de segmentation d'image issue de la morphologie mathématique considère l'image à niveaux de gris comme un relief topographique dont on simule l'inondation.

En règle générale, les gouttes représentent moins de 20 % de l'image, et leur taille est inférieure à 1 nm, après calibration sur les tailles réelles dans l'échantillon. Les simulations des images théoriques permettent de déterminer quel est la distribution attendue des gouttes dans l'image afin de vérifier que la segmentation est correcte. Une segmentation est correcte si le nombre et la position des gouttes s'approche des valeurs théoriques attendues au-delà d'un seuil d'incertitude donné. Optionnellement également, un filtrage de convolution pour combler d'éventuels trous à l'intérieur des gouttes obtenues est mis en oeuvre. Par exemple, un filtre tel que décrit dans la demande de brevet FR2013932 est mis en oeuvre, et/ou un algorithme de type « fill holes » (K.-J. Oh, S. Yea, and Y.-S. Ho, "Hole filling method using depth based inpainting for view synthesis in free viewpoint television and 3- D vidéo," in Proc. Picture Coding Symp., Chicago, IL, May 2009.). A nouveau, l'objectif consiste à s'approcher de la forme théorique idéale, généralement exempte de trous.

Le premier mode de réalisation s'applique pour tout type de composante (cristal, amorphe ou mélange).

Dans un deuxième mode de réalisation, l'étape 44 est mise en oeuvre de manière distincte selon le type de matériau, i.e. matériau cristallin ou matériau amorphe.

Dans ce deuxième mode de réalisation, l'étape 44 met en oeuvre un filtrage du sous-pavé de composante, et optionnellement une normalisation et une binarisation.

Par exemple, pour un sous-pavé de composante d'un matériau cristallin, l'étape 44 met en oeuvre un filtrage par convolution avec un noyau HBSG (pour « Half Ball Savitzky-Golay ») tel que décrit dans la demande de brevet FR2013932. Ce filtrage, par exemple utilise un noyau HBSG de taille 21x21 pixels, avec un lissage d'ordre 2 ou 3, puis une normalisation locale des niveaux de gris selon la méthode décrite dans la demande de brevet FR2013933, et enfin un seuillage, par exemple en appliquant un seuillage adaptatif de Bernsen. décrit dans "Dynamic Thresholding of Grey-Level Images", Proc. of the 8th Int. Conf. on Pattern Recognition, 1986, avec un rayon de 10 pixels. C'est la simulation atomistique des images théoriques « parfaites » qui permet de vérifier que les paramètres de traitement d'images permettent de converger vers la forme théorique parfaite, pour chaque cristal, chaque orientation et chaque jeu de paramètres instrumentaux.

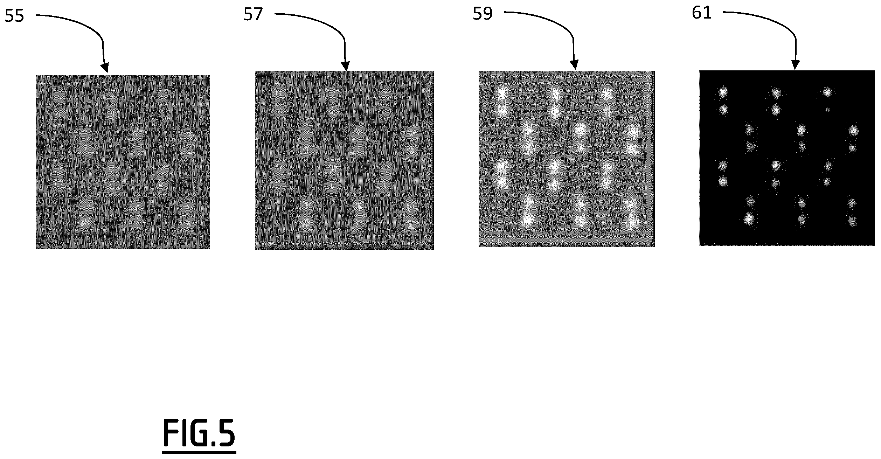

La **figure** 5 illustre, sur des exemples d'images numériques 2D, le résultat de l'étape 44 dans son deuxième mode de réalisation décrit ci-dessus : le traitement est appliqué sur une image de composante homogène 55, l'image 57 est obtenue par filtrage par convolution avec un noyau HBSG, l'image 59 est l'image obtenue par normalisation locale à partir de l'image 57 et l'image 61 est le résultat du seuillage de Bernsen de l'image 59 qui montre les gouttes (représentées par des taches claires) sur un fond sombre uniforme.

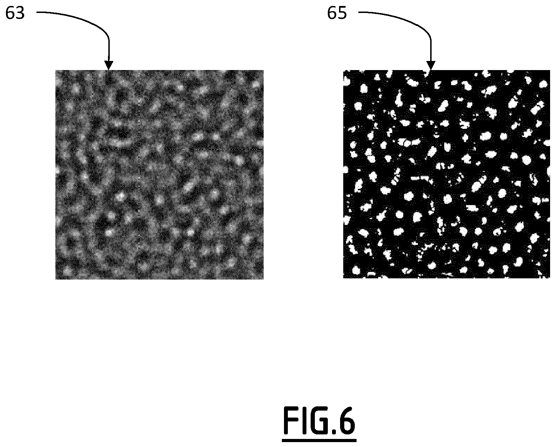

La **figure 6** illustre, sur des exemples d'images numériques 2D, le résultat de l'étape 44 dans son premier mode de réalisation, dans le cas d'un matériau amorphe : l'image 63 est l'image d'entrée et l'image 65 est l'image de gouttes obtenue par classification obtenue en appliquant un algorithme de classification entraîné par apprentissage machine suivi d'un traitement par ligne de partage des eaux.

Au final l'étape 44 permet d'obtenir le sous-pavé de gouttes pour chaque sous-pavé de composante.

L'étape 44 est suivie d'une transformation de Fourier 46, appliquée sur le sous-pavé de gouttes pour obtenir un sous-pavé de données de fréquence.

De manière optionnelle, un cadre périphérique noir (zero-padding) est ajouté sur le pourtour du sous-pavé de gouttes pour augmenter la résolution spatiale après transformation de Fourier.

Par la suite, plusieurs traitements sont appliqués au sous-pavé de données de fréquences, sensiblement en parallèle ou successivement.

D'une part, le sous-pavé de données de fréquences est traité (traitement 48) pour obtenir le sous-pavé 50 de données positionnelles de sonde de l'échantillon observé.

D'autre part, le sous-pavé de données de fréquences est traité (traitement 52) pour obtenir le sous-pavé 54 de données positionnelles de référence de l'échantillon observé.

Le traitement 48 est dit traitement de sonde, et permet ainsi d'obtenir le sous-pavé 50 de données positionnelles de sonde, contenant les déformations de l'échantillon observé.

Le traitement 52 est dit traitement de référence, et permet ainsi d'obtenir le sous-pavé 54 de données positionnelles de référence, c'est-à dire sans déformations et par conséquent constituant alors une référence pour caractériser les déformations du sous-pavé de données positionnelles de sonde 50.

Le traitement de sonde 48 comprend une étape 56 de calcul d'un masque de sonde, également appelé masque de fenêtrage fréquentiel, à appliquer (étape 58,) au sous-pavé de données de fréquence, une application 60 de la transformation de Fourier inverse et une étape optionnelle 62 de correction d'artefacts introduits par la transformation de Fourier.

L'étape 56 de calcul du masque de sonde à appliquer au sous-pavé de données de fréquence est appliquée de manière différenciée dans le cas d'un matériau cristallin et dans le cas d'un matériau amorphe.

Dans le cas d'un matériau cristallin, le masque de sonde, qui est dans ce cas un masque de sonde cristallin, est formé par un réseau périodique de premiers motifs en forme de boule (au sens de la topologie générale) dans le cas général, et en forme de disque dans le cas particulier d'une image à 2 dimensions.

Le masque de sonde cristallin est obtenu, dans un mode de réalisation, par simulation du diagramme de diffraction correspondant au cristal observé, par exemple le silicium orienté [110], et ajustement des paramètres cristallins de longueurs (a,b,c) et d'angles (α,β,γ) définissant la maille du cristal pour correspondre au mieux aux taches obtenues dans le sous-pavé des fréquences, qui représente classiquement une bonne approximation du diagramme de diffraction de l'échantillon. Les taches observées dans le sous-pavé des fréquences sont donc appelées taches de diffraction, tout comme les taches de diffraction classiquement observées dans les diagrammes de diffraction.

Dans des hyperespaces de dimension supérieure, on obtient des boules de diffraction.

Les premiers motifs (boules) du masque de sonde cristallin ont un premier diamètre choisi.

Par exemple, en effectuant la statistique de toutes les largeurs à mi-hauteur des taches de diffraction, on choisit un diamètre égal à 4 fois la plus grande largeur à mi-hauteur obtenue pour définir le diamètre des taches du masque de fenêtrage. Dans un espace de dimension N strictement supérieure à 2 (hyperespace), la plus grosse boule de diffraction du sous-pavé des fréquences est sélectionnée, puis représentée en coordonnées hypersphériques à partir de son centre. Le diamètre choisi est égal au quadruple de la largeur à mi-hauteur de l'intensité moyennée sur tous les angles de l'hyperespace. Plus généralement, la simulation atomistique permet de choisir le meilleur diamètre pour chaque cas particulier.

En variante, le masque de sonde cristallin est obtenu par extraction des motifs (e.g. boules) formant un réseau périodique du diagramme de diffraction par une méthode d'apprentissage machine entraînée à cet effet, mettant en oeuvre un classifieur permettant par exemple de classifier en un nombre prédéterminé classes comprenant au moins une classe représentative d'un fond d'image, et une classe représentative une classe représentative d'une boule de diffraction. L'apprentissage machine est effectué au préalable, dans une phase d'apprentissage. Il s'agit par exemple d'un apprentissage supervisé, prenant en entrée des données d'apprentissage formées par des pavés de diffraction variées dont les points sont préalablement étiquetés selon les classes recherchées. Les paramètres du classifieur sont mis au point lors de la phase d'apprentissage pour obtenir la meilleure classification des données d'apprentissage.

Par exemple, le classifieur est un algorithme de type forêts aléatoires (« random forest »). Une variante consiste à utiliser un algorithme de type « Bayes » (et sous_variantes) ou un apprentissage à base de fonctions, ou de type « lazy » ou basé sur des règles (« rule ») ou à base d'arbres (« trees ») ou toute variante et combinaison de variantes permettant de classifier des formes ou objets dans un espace topologique discret. Cette méthodologie permet d'extraire (segmenter) les boules de diffraction pour les dissocier du reste de l'image qui est considéré comme un fond noir (background).

Le masque de sonde est formé, dans le cas d'un cristal périodique, par des boules ayant le premier diamètre calculé, disposées selon le motif de répétition théorique obtenu.

En d'autres termes, le masque de sonde est le masque le plus proche d'une simulation parfaite avec le plus grand diamètre des boules compatible avec le sous-pavé de données de fréquences.

Le masque de sonde obtenu à l'étape 56 est appliqué au sous-pavé de données de fréquences à l'étape 58.

Le fenêtrage fréquentiel de sonde 58 consiste à conserver les fréquences du sous-pavé des fréquences à l'intérieur des premiers motifs (boules) du masque de sonde et à mettre à zéro les autres valeurs du sous-pavé de données de fréquences. On obtient alors un sous-pavé fréquentiel de sonde.

Une transformation de Fourier inverse est appliquée (étape 60) au sous-pavé fréquentiel de sonde, afin d'obtenir dans le domaine spatial, (également appelé réseau direct), le sous-pavé de données positionnelles de sonde de l'échantillon observé.

Optionnellement, une étape 62 de correction d'artefacts introduits par la transformation de Fourier est appliquée. En effet, il est connu que la transformation de Fourier est susceptible d'ajouter des artefacts, par exemple une périodisation ou un étalement du signal.

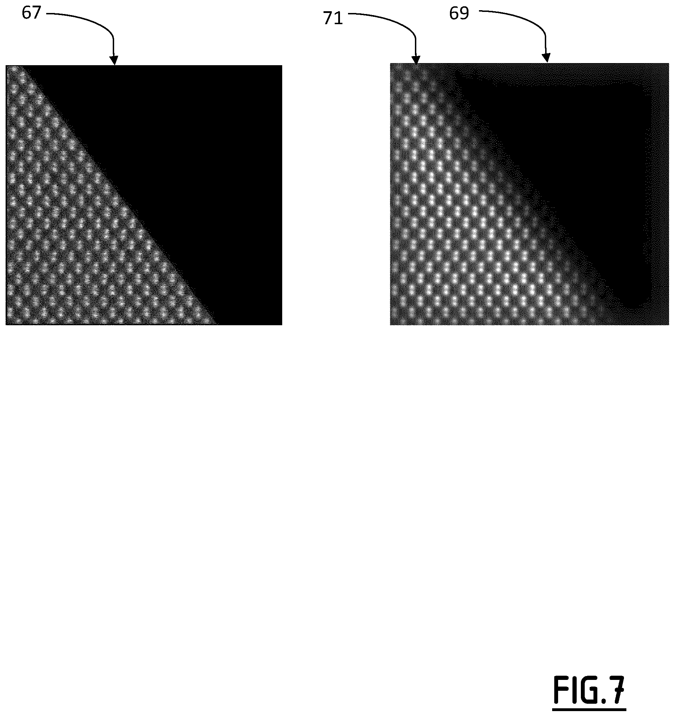

Par exemple, une bordure fantôme est observable dans l'exemple de la **figure 7** dans laquelle on observe un sous-pavé homogène 67, le sous-pavé correspondant 69 obtenu après fenêtrage fréquentiel de sonde, le sous-pavé 69 comprenant une bordure 71 correspondant à un artéfact dû à la transformation de Fourier.

Pour réaliser la correction 62, selon un mode de réalisation, en partant du sous-pavé de gouttes, un masque de correction est obtenu par dilatation des gouttes obtenues par le module 22.

Dans l'exemple de la figure 7 le rayon des gouttes est égal à 0,18 nm, soit la demi distance entre plus proches gouttes voisines. Plus la dilatation est grande, plus le risque d'inclure les artefacts périphériques est élevé.

De manière plus générale, le dimensionnement de la dilatation est calculé par simulation au cas par cas. Une autre méthode consiste à réaliser un apprentissage machine avec le module 20, afin de délimiter précisément la région correspondant à chaque composant. Cette région constitue un masque qui délimite précisément la zone réellement occupée, exempte des artéfacts de la transformée de Fourier.

Le masque de correction obtenu est superposé au sous-pavé de sonde, ce qui permet alors d'obtenir un sous-pavé de sonde corrigé, dans lequel les artefacts (e.g. bordure fantôme) dus au filtrage de Fourier ont été éliminés.

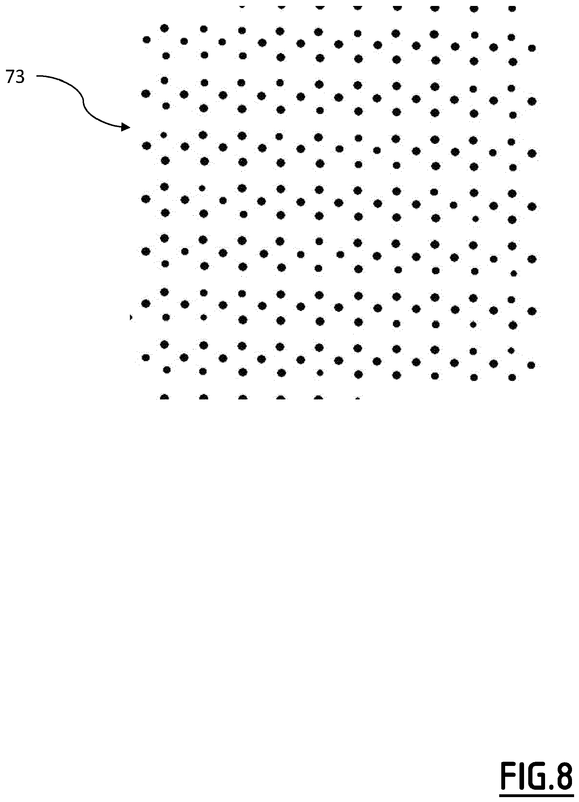

La **figure 8** illustre un masque de sonde cristallin 73 obtenu pour le matériau de la figure 7.

Dans le cas d'un matériau amorphe, le masque de sonde, dit masque de sonde amorphe, est formé par un ou plusieurs premiers anneaux concentriques autour d'un point central, dans le domaine fréquentiel et pour une image de dimension 2.

Lorsque N est strictement supérieur à 2, ces anneaux deviennent des sphéroïdes.

La caractéristique d'Euler du sous-pavé des fréquences est donc égale à 1 pour des boules de diffraction d'un matériau cristallin, et 2 pour les sphéroïdes de diffraction des matériaux amorphes.

Dans le cas d'un matériau amorphe, l'étape 56 comporte le calcul d'un masque de sonde formé d'un anneau, circulaire, ovoidal ou elliptique éventuellement imparfait obtenu par ajustement sur le sous-pavé de données de fréquences, par exemple par l'utilisation de splines qui recouvrent de manière annulaire les maxima d'intensité du sous-pavé de données de fréquences.

Dans le cas des espaces de dimensions supérieures (>2), le masque de sonde des matériaux amorphes est constitué d'une boule creuse (ou sphéroïde) éventuellement gauchie, centrée sur la fréquence nulle.

Dans un mode de réalisation, la forme du sphéroïde est ajustée pour minimiser l'écart quadratique moyen avec les maxima d'intensité du sous-pavé de données de fréquences.

Dans un autre mode de réalisation, une hypersphére parfaite est simulée, cette hypersphère étant attendue par la connaissance de l'échantillon, par exemple via la manière dont il a été synthétisé ou via l'ensemble des résultats de nanocaractérisation réalisés par ailleurs (par exemple les mesures de spectroscopie XPS (X-Ray photoelectron spectroscopy). L'inverse de la distance entre premiers atomes plus proches voisins dans l'espace direct est égal au rayon de l'hypersphére du masque de sonde amorphe dans le réseau réciproque.

Les anneaux formant le masque de sonde amorphe ont une épaisseur estimée à partir de l'intensité radiale moyennée sur 360° du sous-pavé de données de fréquences. Le premier pic de cette courbe est le plus intense et c'est le quadruple de sa largeur à mi-hauteur qui donne l'épaisseur de l'anneau. Dans le cas le plus général, l'épaisseur de l'anneau est estimée par simulation atomistique pour chaque cas particulier.

Dans le cas des dimensions supérieures, l'intensité radiale I(r) où r est l'éloignement par rapport au centre de fréquence nulle, est calculée, puis moyennée dans tous les angles de l'espace en coordonnées hypersphériques. L'épaisseur de l'hypersphère du masque de sonde amorphe est par exemple égale au quadruple de la largeur à mi-hauteur du pic le plus intense de I(r). Dans le cas le plus général, l'épaisseur de l'hypersphère est estimée par simulation atomistique pour chaque cas particulier.

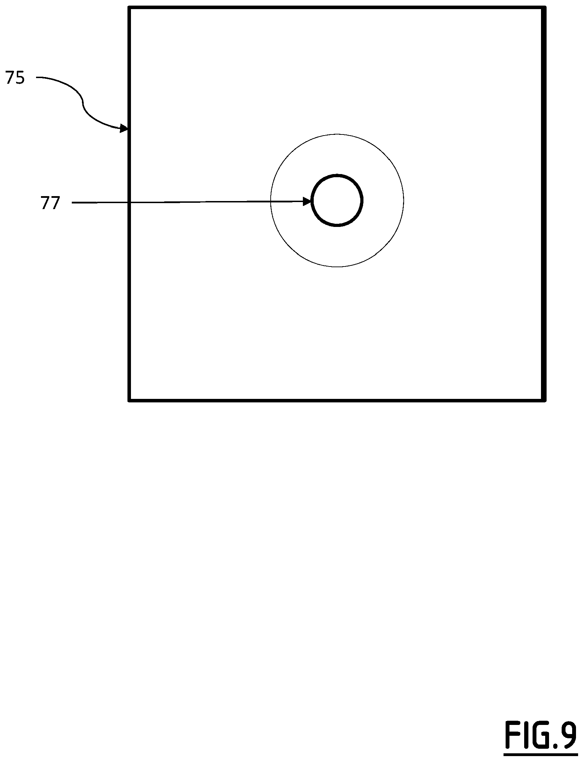

La **figure 9** illustre un masque de sonde amorphe 75, comprenant un anneau 77. Le masque de sonde amorphe obtenu à l'étape 56 est appliqué au sous-pavé de données de fréquences à l'étape 58.

L'application 58 (fenêtrage fréquentiel de sonde) du masque de sonde consiste à conserver les valeurs du sous-pavé des données de fréquences qui sont délimitées par les motifs du masque de sonde et à mettre à zéro les autres valeurs du sous-pavé des données de fréquences.

Une transformation de Fourier inverse est appliquée (étape 60) au résultat de l'étape de fenêtrage fréquentiel de sonde, pour obtenir le sous-pavé de données positionnelles de sonde de l'échantillon observé dans le domaine spatial.

Le traitement de référence 52 est analogue au traitement de sonde 48, mais en faisant intervenir le calcul 64 d'un masque de référence, qui est un autre masque de fenêtrage fréquentiel, comportant des deuxièmes motifs de forme analogue mais de dimensions réduites par rapport aux premiers motifs du masque de sonde.

Par exemple, les boules sont alors réduites à quelques pixels et les boules creuses sont réduites à des sphères de quelques pixels d'épaisseur, en veillant à conserver les positions des maxima d'intensité.

Le traitement de référence 52 comprend en outre l'application 66 du masque de référence au sous-pavé de données de fréquences et une application 68 de la transformation de Fourier inverse pour obtenir le sous-pavé de données positionnelles de référence, et une étape optionnelle 70 de correction d'artefacts introduits par la transformation de Fourier.

L'étape 64 de calcul du masque de référence est analogue à l'étape 56 préalablement décrite mais avec une réduction de l'épaisseur des motifs obtenus, tout en conservant leur position.

Dans un mode de réalisation, le calcul du masque de référence est effectué par simulation à partir de caractéristiques de l'échantillon (type de matériau, propriétés théoriques attendues) et de paramètres du microscope utilisé lors de l'acquisition du pavé de données représentatif de l'échantillon.

Dans le cas d'un matériau cristallin, les motifs sont réduits à un diamètre choisi égal à quelques pixels (<10).

En complément optionnel, la résolution est augmentée, selon les méthodes décrites dans la demande de brevet FR 2013933.

Les étapes 66 et 68 sont analogues aux étapes 58 et 60 décrites précédemment.

Dans le cas d'un matériau amorphe, l'étape 64 de calcul du masque de référence est obtenue par amincissement de l'anneau du masque de sonde jusqu'à une épaisseur ultime de quelques pixels (<10).

Dans les hyperespaces de dimension N strictement supérieure à 2, cette idée se généralise en réduisant l'épaisseur de la boule creuse à quelques pixels, tout en conservant la position des maxima d'intensité.

Dans le cas d'un alliage ternaire AxByCz, et dans le cas où N=2 dimensions, on peut par exemple calculer un cercle AB dont le rayon est l'inverse de la distance attendue entre un atome de A et un atome de B, un autre anneau BC dont le rayon est l'inverse de la distance entre B et C, et un troisième anneau AC dont le rayon est l'inverse de la distance entre A et C. Si on utilise l'anneau AB, alors le filtrage conserve l'information provenant des liaisons AB, et idem avec AC ou BC.

Plus généralement, dans un hyperespace de dimension N strictement supérieure à 2, pour un nombre d'atomes quelconque dans les hyperespaces : l'anneau est remplacé par une hypersphère de rayon choisi à l'inverse de la distance interatomique entre l'atome X et l'atome Y pour sonder la contribution des liaisons X-Y dans le matériau.

Le procédé comporte finalement une étape 72 d'estimation d'un déplacement entre le sous-pavé de données positionnelles de sonde et le sous-pavé de données positionnelles de référence selon au moins deux dimensions desdites N dimensions, permettant d'obtenir une cartographie des déformations selon ladite au moins deux dimensions.

De préférence, à l'étape 72 est mis en oeuvre une méthode d'estimation de la dynamique des particules par vélocimétrie de particules, décrite dans « Particle image velocimetry - Classical operating rules from today's perspective » de S ; Scharnowski et al, publié dans Optics and Lasers Engineering 135, 2020.

L'application d'une telle méthode permet de réaliser une estimation de déplacement, initialement prévue pour estimer un mouvement entre deux pavés de données (ou deux images numériques) correspondant à des instants temporels distincts.

Dans le cas présent, l'estimation de déplacement est effectuée, dans chacune des dimensions, entre le sous-pavé de données positionnelles de sonde et le sous-pavé de données positionnelles de référence, ce qui permet de cartographier les déformations des gouttes par rapport à une référence idéalisée.

Avantageusement, le procédé de traitement de données multidimensionnelles de microscopie pour la localisation de déformations proposé permet de traiter tout type de matériau, cristallin ou amorphe.

Avantageusement, le procédé permet de cartographier des déformations par type de plans cristallins. En effet, chaque plan cristallin donne des taches de diffraction spécifiques dans l'espace des fréquences (réseau réciproque). Donc le masquage d'une famille de plans cristallins choisie est possible en sélectionnant les boules de diffraction correspondantes.

Avantageusement, le découpage en composantes homogènes permet d'obtenir une sélectivité chimique, en séparant en sous-pavés par le critère du niveau de gris représentatif du numéro atomique moyen du composant cristallin. Ainsi, l'invention permet un traitement sélectif soit par plan cristallin soit par numéro atomique moyen. Par exemple, pour l'arséniure de gallium GaAs, on obtient un sous-pavé de composante pour Ga et un sous-pavé de composante pour As en filtrant par niveaux de gris.

Le choix du masque de sonde permet donc de réaliser une sélectivité selon l'orientation cristalline, selon la phase ou selon un type de défaut à caractériser, dont une signature spectrale est connue. La sélectivité est définie par le choix du masque des fréquences ou du masque des composantes.

Selon une autre variante, à l'étape de découpage en sous-pavés de composante est prise en compte la permittivité diélectrique, chaque sous-pavé de composante obtenu ayant une permittivité diélectrique donnée. En d'autres termes, un critère d'homogénéité de permittivité diélectrique est appliqué à l'étape de découpage en sous-pavés de composante. Par exemple la permittivité diélectrique est obtenue à partir de mesures VEELS, par exemple par la technique EFTEM-VEELS. Cette caractérisation permet de définir un nouveau masque de tri sélectif dans le domaine des composantes.

Selon une autre variante, l'étape de découpage en sous-pavés de composante met en oeuvre un critère d'homogénéité des propriétés électromagnétiques, caractérisées par exemple par la technique DPC.

Selon une autre variante, à l'étape de fenêtrage fréquentiel de sonde, le diamètre de l'anneau est choisi en fonction d'une distance interatomique, par exemple entre l'atome Ga et l'atome As, ce qui permet d'analyser les déformations des liaisons GaAs.

Selon une autre variante, le procédé comporte une étape supplémentaire, après l'application de la transformation de Fourier au sous-pavé de gouttes, de sélection de phases, afin d'obtenir un fenêtrage fréquentiel sur un ensemble de gouttes provenant d'une même phase ou d'un même sous-ensemble de phases. Ce tri est obtenu par masquage fréquentiel sélectif.

Selon une autre variante, le masque de fenêtrage fréquentiel de sonde prend en compte un type de défaut prédéterminé, ayant une signature spectrale de défaut. On peut ainsi conserver ou au contraire éliminer toute l'information fréquentielle issue de ce défaut dans l'étape de fenêtrage fréquentiel.

Selon une autre variante, les paramètres du fenêtrage fréquentiel de sonde (diamètre des boules du masque de sonde, épaisseur des boules creuses) sont choisis en fonction d'une gamme de distorsions choisie. Plus le diamètre des boules ou l'épaisseur des sphéroïdes sont grands, plus grandes sont les distorsions observables.

Selon une autre variante, le module 22 peut générer les gouttes qui peuvent correspondre à la position des atomes, mais en effectuant le traitement avec l'image négative alors les gouttent matérialisent cette fois la position des espaces vides entre les atomes Le procédé permet alors d'obtenir en plus des déformations des atomes, les déformations des espaces interatomiques. La littérature montre qu'aucune autre technique n'a donné ce type d'information jusqu'à maintenant. Seul ce brevet permet de cartographier les déformations des espaces vides entre les colonnes atomiques.

Bien entendu, il est possible de combiner plusieurs variantes exposées ci-dessus, par combinaison de tri de masquage, soit fréquentiel, soit de composante, à partir de l'image ou de son négatif.

## Revendications

1. Procédé de traitement de données multidimensionnelles de microscopie pour la localisation de déformations dans un échantillon, comportant une acquisition d'au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux, le procédé étant **caractérisé en ce qu'**il comporte des étapes de :
- pour au moins un sous-pavé de données dudit pavé de données d'entrée, dit sous-pavé de composante, comportant des données homogènes selon un critère d'homogénéité relatif à au moins un matériau de l'échantillon observé, application (44) d'un traitement pour obtenir un sous-pavé, dit sous-pavé de gouttes, comportant des gouttes représentatives d'une structure atomique d'une partie de l'échantillon observé ;
- application (46) d'une transformation de Fourier sur le sous-pavé de gouttes pour obtenir un sous-pavé de données de fréquences, dans le domaine fréquentiel,
- application (48) d'un masque de sonde dans le domaine fréquentiel au sous-pavé de données de fréquences, ledit masque de sonde étant déterminé en fonction dudit au moins un matériau de l'échantillon observé, et ensuite application d'une transformation de Fourier inverse pour obtenir un sous-pavé de données positionnelles de sonde,
- application (52) d'un masque de référence dans le domaine fréquentiel au sous-pavé de données de fréquences, ledit masque de référence étant déterminé en fonction dudit au moins un matériau de l'échantillon observé, et ensuite application d'une transformation de Fourier inverse pour obtenir un sous-pavé de données positionnelles de référence,
- estimation (72) d'un déplacement entre le sous-pavé de données positionnelles de sonde et le sous-pavé de données positionnelles de référence selon au moins une dimension desdites N dimensions, permettant d'obtenir une cartographie des déformations selon ladite au moins une dimension,
- le procédé comportant en outre une étape (56) de calcul dudit masque de sonde à partir du sous-pavé de données de fréquences, le masque de sonde comportant de premiers motifs, et le masque de référence comportant de deuxièmes motifs, lesdits deuxièmes motifs étant de forme analogue et de dimension réduite par rapport aux premiers motifs.

2. Procédé selon la revendication 1, comportant une étape de découpage (42) du pavé de données d'entrée en sous-pavés de composantes, chaque sous-pavé de composante comportant des données homogènes selon un critère d'homogénéité relatif à au moins un matériau de l'échantillon observé.

3. Procédé selon la revendication 2, dans lequel l'étape de découpage (42) met en oeuvre une segmentation automatisée par apprentissage machine.

4. Procédé selon la revendication 2 ou 3, dans lequel le critère d'homogénéité est un critère d'homogénéité de structure, et/ou de valeurs d'intensité des données et/ou de permittivité diélectrique et/ou de propriétés électromagnétiques.

5. Procédé selon l'une quelconque des revendications 1 à 4, dans lequel l'application d'un traitement (44) pour obtenir un sous-pavé de gouttes comportant des gouttes représentatives d'une structure atomique d'une partie de l'échantillon observé met en oeuvre un algorithme d'apprentissage machine, entraîné pour classifier les données du sous-pavé de composante en deux classes, respectivement une classe de « fond » et une classe de « gouttes ».

6. Procédé selon la revendication 5, comportant en outre, après la classification, une application d'une segmentation morphologique.

7. Procédé selon l'une quelconque des revendications 1 à 4, dans lequel l'application (44) d'un traitement pour obtenir un sous-pavé de gouttes comportant des gouttes représentatives d'une structure atomique d'une partie de l'échantillon observé met en oeuvre un filtrage par convolution avec un noyau de taille donnée, une normalisation locale et un seuillage de binarisation.

8. Procédé selon l'une quelconque des revendications 1 à 7, comportant en outre une étape (56) de calcul du masque de sonde à partir du sous-pavé de données de fréquences, et une étape de calcul du masque de référence à partir du masque de sonde.

9. Procédé selon l'une quelconque des revendications 1 à 7, comportant une étape de calcul d'un masque de référence par simulation à partir de caractéristiques dudit échantillon et de paramètres utilisés lors de l'acquisition de l'image de microscopie.

10. Procédé selon l'une des revendications 8 ou 9, dans lequel, dans le cas où ledit sous-pavé de données de fréquences correspond à un matériau cristallin, ledit masque de sonde est formé par un réseau périodique de boules en N dimensions, chaque boule ayant un premier diamètre associé, et ledit masque de référence est formé par un réseau périodique de motifs en forme de boule en N dimensions ayant un deuxième diamètre inférieur au premier diamètre.

11. Procédé selon la revendication 10, dans lequel ledit réseau périodique de boules est obtenu, pour ledit matériau cristallin, à partir d'un diagramme de diffraction simulé pour ledit matériau cristallin.

12. Procédé selon la revendication 10, dans lequel ledit réseau périodique de boules est obtenu, par application d'une classification par une méthode de classification par apprentissage machine entraînée à cet effet, appliquée au sous-pavé de données de fréquences.

13. Procédé selon l'une des revendications 8 à 12, dans lequel, dans le cas où ledit sous-pavé de données de fréquences correspond à un matériau amorphe, ledit masque de sonde comporte des sphéroïdes concentriques autour d'un point central du domaine fréquentiel, de première épaisseur, le ledit masque de référence comporte de sphéroïdes concentriques autour d'un point central du domaine fréquentiel, de deuxième épaisseur, inférieure à la première épaisseur.

14. Procédé selon l'une quelconque des revendications 1 à 13, dans lequel l'étape d'estimation (72) d'un déplacement permettant d'obtenir une cartographie des déformations selon ladite au moins une dimension met en oeuvre une méthode d'estimation par vélocimétrie de particules.

15. Programme d'ordinateur comportant des instructions logicielles qui, lorsqu'elles sont exécutées par un dispositif électronique programmable, mettent en oeuvre un procédé de données multidimensionnelles de microscopie pour la localisation de déformations dans un échantillon conforme aux revendications 1 à 14.

16. Dispositif de traitement de données multidimensionnelles de microscopie pour la localisation de déformations dans un échantillon, configuré pour acquérir au moins une image de microscopie formant un pavé de données d'entrée, la ou chaque image dudit pavé étant représentative d'une partie de l'échantillon observé, ledit pavé de données d'entrée étant représenté dans un espace à N dimensions, N étant supérieur ou égal à deux, le dispositif comportant un processeur de calcul configuré pour mettre en oeuvre :
- pour au moins un sous-pavé de données dudit pavé de données d'entrée, dit sous-pavé de composante, comportant des données homogènes selon un critère d'homogénéité relatif à au moins un matériau de l'échantillon observé, un module (22) d'application d'un traitement pour obtenir un sous-pavé, dit sous-pavé de gouttes, comportant des gouttes représentatives d'une structure atomique d'une partie de l'échantillon observé ;
- un module (24) d'application d'une transformation de Fourier sur le sous-pavé de gouttes pour obtenir un sous-pavé de données de fréquences, dans le domaine fréquentiel,
- un module (26) d'application d'un masque de sonde dans le domaine fréquentiel au sous-pavé de données de fréquences, ledit masque de sonde étant déterminé en fonction dudit au moins un matériau de l'échantillon observé, et ensuite un module (30) d'application d'une transformation de Fourier inverse pour obtenir un sous-pavé de données positionnelles de sonde,
- un module (28) d'application d'un masque de référence dans le domaine fréquentiel au sous-pavé de données de fréquences, ledit masque de référence étant déterminé en fonction dudit au moins un matériau de l'échantillon observé, et ensuite un module (30) d'application d'une transformation de Fourier inverse pour obtenir un sous-pavé de données positionnelles de référence,
- -un module (32) d'estimation d'un déplacement entre le sous-pavé de données positionnelles de sonde et le sous-pavé de données positionnelles de référence selon au moins une dimension desdites N dimensions, permettant d'obtenir une cartographie des déformations selon ladite au moins une dimension, le masque de sonde comportant de premiers motifs, et le masque de référence comportant de deuxièmes motifs, lesdits deuxièmes motifs étant de forme analogue et de dimension réduite par rapport aux premiers motifs.
